(19) Europäisches Patentamt
European Patent Office
Office européen des brevets

(11) Publication number: 0 217 339 A2

# (12) EUROPEAN PATENT APPLICATION

(21) Application number: 86113373.4

(22) Date of filing: 29.09.86

(51) Int. Cl.[4]: C02F 1/50

(30) Priority: 30.09.85 US 782055

(43) Date of publication of application: 08.04.87 Bulletin 87/15

(84) Designated Contracting States: AT BE CH DE FR GB IT LI LU NL SE

(71) Applicant: UNION CARBIDE CORPORATION
39 Old Ridgebury Road
Danbury Connecticut 06817(US)

(72) Inventor: Theis, Alan Bell
300 Rolling Knolls Way
Bridgewater New Jersey 08807(US)

(74) Representative: Weinhold, Peter, Dr. et al
Patentanwälte Dipl.-Ing. G. Dannenberg Dr. P. Weinhold Dr. D. Gudel Dipl.-Ing. S. Schubert Dr. P. Barz Siegfriedstrasse 8
D-8000 München 40(DE)

## (54) Treating aqueous systems with synergistic algacidal compositions.

(57) Combinations of glutaraldehyde and quaternary ammonium compound provide synergistically enhanced algacidal activity, reduced foaming, low corrosion, and other improvements in treating aqueous systems including cooling towers, swimming pools and the like.

EP 0 217 339 A2

# TREATING AQUEOUS SYSTEMS WITH SYNERGISTIC ALGACIDAL COMPOSITIONS

## BACKGROUND OF THE INVENTION

### Field of the Invention

This invention relates to the use of improved algacides, and more particularly, the processes for controlling algae growth in aqueous systems exposed to sunlight using synergistic combinations of glutaraldehyde and quaternary ammonium compounds.

### Description of Background Information

Various aqueous systems exposed to the environment, particularly sunlight, are subjected to algal fouling, i.e., the undesirable growth of algae in the system. Such aqueous systems include, for example, cooling water systems, swimming pools or the like systems in which the aqueous liquid is subjected to conditions which can promote algal growth.

Algal fouling is undesirable for a variety of aesthetic and economic considerations. With regard to recirculating cooling water systems, algal fouling typically causes decreased heat exchanger efficiencies, increased back pressure, increased maintenance costs due to manual cleaning requirements, poor water distribution on decks and corrosion.

Unlike many other organisms, algae are eukaryotic, i.e., nuclei containing, photosynthetic organisms. Algae are relatively large celled, sometimes motile and usually colored. Algal fouling of aqueous systems usually involves green and/or blue-green algae and the dinoflagellates and diatoms which are unicellular, although many form filaments or colonies. Algae, in general, can withstand very high to very low light intensity and can grow over a relatively wide pH range of about 5.5 to 9.0, or more. The temperature range for survival is from less than 0°C to over 40°C, having a typical growth range of from 10°C to 35°C. Being photosynthetic, algae produce oxygen when exposed to light, such that algal cells are usually in a relatively oxygenated environment. Algae tolerate a wide range of salinity, from distilled water to saturated brine. Algae have generally simple growth requirements of light, water, air and minor quantities of inorganic nutrients.

Algal fouling problems can be the source of many problems relating to corrosion, due to changes in oxygen and ion content of aqueous systems containing metal surfaces, since the diffusion through the algal biofilm will usually be at a different rate than to a metal surface free of algae. The algae may actively concentrate or exclude material from the biofilm altogether. Such variations could lead to rapid development of algal cells in or around the biofilm, as well as prevent the diffusion of biocides or corrosion inhibitors to the metal surface. Many algae excrete organic acids which can accumulate and cause corrosion due to formation of localized areas of low pH, which degrades the passivating or protective layer of corrosion exposing the metal substrate to accelerated corrosion.

Controlling algae growth differs significantly from other biocidal applications due to the unique character of algae. As a photosynthetic, cell wall containing plant which develops in aqueous systems exposed to the environment, only a relatively limited number of biocides can be used with efficacy to control algal growth. In general, bactericidal activity does not equate or suggest effectivity against algal growth. Due to the different characteristics distinguishing algae from bacteria or the like organisms, biocidal compositions are generally not as responsive in treating algae as in common sterilizing or disinfecting applications.

Algal fouling is commonly treated with chlorine which is relatively inexpensive in price. The use of chlorine, however, presents significant environmental problems in disposal or discharge of water of the like aqueous systems treated with chlorine. Discharge of chlorine treated solutions requires dilution to very low concentrations due to its high toxicity to mammals, fish and the like of such compositions, as well as its limited biodegradation. Furthermore, the use of chlorine is effective over only a limited pH range, excluding high pH conditions.

Various cationic compounds, including quaternary ammonium compounds, have been used as algacides in treating algal growth in aqueous systems. In particular, n-alkyl (di)methyl benzyl ammonium chlorides have been used as algacides under the tradenames KARACIDETM by Pargil Inc., ONYXTM 10% BTC 776 Industrial Water Cooling Tower Algaecide and ONYXTM 10% BTC 2125M Industrial Water Cooling Tower Algaecide by Onyx Chemical Co., MAQUATTM TC76-50% by Mason Chemical Co. and LONZATM Water Treatment Microbiocide by Lonza Inc. Such treatment is limited, however, in providing undesirable foaming in aqueous system applications with turbulent flow, such as recirculating cooling towers. Furthermore, the quaternary ammonium compounds are generally incompatible with other components used in

aqueous systems, such as typical corrosion inhibitors. As a consequence, such compositions have limited utility in aqueous systems containing metal surfaces in avoiding corrosion or compatibility problems.

Aqueous glutaraldehyde solutions provide moderately effective control of algal fouling in aqueous systems. Such treatment is described in product brochures, such as "AQUCAR™ Water Treatment Microbiocides" published by Union Carbide Corp., 1981. However, under certain circumstances, such treating solutions may require prohibitively expensive, high concentrations of glutaraldehyde, especially in very large cooling systems operating at low cycles of concentration.

Combinations of glutaraldehyde and quaternary ammonium compounds have been used in specific biocidal applications. In U.S. Patent No. 3,282,775 - (Stonehill), such compositions are disclosed as sporicides. In U.S. Patent No. 4,107,312 (Wegner et al.), such compositions are disclosed in toilet disinfectant solutions. In Canadian Patent No. 1,154,555 (Letartre) such compositions are disclosed as bactericides in food industry applications. In Japanese Patent Application Publication No. 30,902/81 (Kosakai) such compositions are disclosed for sterilizing silkworm cultures against Aspergillus infection. To the best of my knowledge, the use of such combinations as algacides has not heretofore been disclosed or suggested.

There is, however, a need for an algacidal composition useful in treating aqueous systems exposed to the environment which provides low risk to the environment when used or disposed, utility over a relatively wide pH range, combined with low foaming as well as compatibility with typical adjuvants, including corrosion inhibitors. Such compositions should also be non-corrosive and possess low odor. It would be desirable to provide algacidal compositions containing active ingredients of high efficacy enabling reduced cost and effectiveness at low concentrations of active ingredients.

SUMMARY OF THE INVENTION

This invention concerns a process for controlling algae growth in an aqueous system. The process comprises adding an effective algacidal amount of an algacidal composition to the aqueous system. The algacidal composition contains glutaraldehyde and quaternary ammonium compound as active ingredients.

DETAILED DESCRIPTION OF THE INVENTION

The algacidal composition used in this invention has been found to provide low environmental hazard, low toxicity, and applicability over a wide range of pH, as well as low foaming and compatibility with typical adjuvants for aqueous systems exposed to the environment. Such algacidal compositions are biodegradable and possess low odor providing improved handling and usage. Such algacidal compositions have been found to provide synergistically increased efficacy enabling reduced costs and activity at low concentrations of active components.

The algacidal composition used in this invention contains two essential components: glutaraldehyde and quaternary ammonium compound, including mixtures of such compounds.

Glutaraldehyde, i.e., 1,5-pentanedial, used in this invention may be of any commercial grade and is generally available as an aqueous solution, usually containing up to about 50 weight percent glutaraldehyde. The particular amount of glutaraldehyde in the algacidal composition is not critical so long as an effective algacidal amount of the active component combination is provided during use. Generally, the algacidal composition contains between about 10 to about 50 weight percent of glutaraldehyde.

The quaternary ammonium compound used in this invention includes those compounds represented by the structural formula:

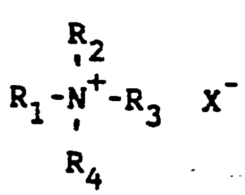

(I)

wherein:

$R_1$ and $R_2$ are each individually hydrogen, $C_{1-4}$ alkyl, preferably methyl, or taken together form a cycloalkyl or aromatic ring, said cycloalkyl or aromatic ring contains preferably 1 to 6 carbon atoms;

$R_3$ is alkyl, preferably methyl, aryl, preferably benzyl, alkylaryl, preferably ethylbenzyl, aralkyl, cycloalkyl or together with $R_1$ and $R_2$ forms a heterocyclic aromatic ring, preferably pyridinium, said alkyl, aryl, alkylaryl, aralkyl, cycloalkyl or heterocyclic aromatic ring contains preferably 1 to 10, e.g. 1 to 6 carbon atoms;

$R_4$ is long chain alkyl having at least 10 carbon atoms, including mixtures thereof, such as $C_{10-18}$ alkyl and preferably mixtures of $C_{12-16}$alkyl; and

X is an anion, preferably a halide, and most preferably chloride or bromide.

Exemplary quaternary ammonium compounds which may be used in the process of this invention include the following: didecyl dimethyl ammonium chloride; dioctyl dimethyl ammonium chloride; alkyl (i.e., mixtures of long chain alkyl groups containing from about 10 to about 16 carbon atoms) dimethyl ethylbenzyl ammonium chlorides; cetyl trimethyl ammonium chloride; (mixtures of long chain) alkyl dimethyl benzyl ammonium chlorides; and the like. Particularly useful quaternary ammonium compounds are mixtures of alkyl dimethyl benzyl ammonium chlorides containing from about 12 to about 16 carbon atoms in the alkyl group, such as distributed under the trade name BARQUAT MB-80 by Lonza, Inc.

The particular amount of quaternary ammonium compound in the algacidal composition is non critical so long as an effective algacidal amount of the active component combination is provided during use. Generally the algacidal composition contains between about 1 to about 40 weight percent of quaternary ammonium compound.

The relative proportion of glutaraldehyde to quaternary ammonium compound in the algacidal composition is not narrowly critical so long as an effective algacidal amount of the combination of active ingredients is provided during use. Generally the weight ratio of glutaraldehyde to quaternary ammonium compound which can provide an effective algacidal amount during use is between about 0.5:1 to about 15:1, preferably from about 5:1 to about 6:1, and most preferably about 5.67:1.

The algacidal composition generally contains a solvent, such as water or water combined with select organic solvents, providing an aqueous solution, enabling ease and convenience to use.

The algacidal compositions of this invention may be used with a wide variety of typical adjuvants following those procedures well established in the art. Exemplary adjuvants include: corrosion inhibitors such as polyphosphates, chromates, nitrates, silicates, phosphonates, molybdates, and the like; antifoaming agents including silicone or oil-based types; dispersants; chelants; flocculants; other algacides or microbiocidal agents; and the like.

In the process of this invention, an effective algacidal amount of the algacidal composition is added to an aqueous system for controlling algae growth, following those procedures established in the art using similar algacidal compositions. Following recognized procedures, care should be taken to avoid simultaneous addition of the algacidal composition and other typical adjuvants that might cause transient, localized areas of potentially incompatible chemical concentrations. The algacidal compositions may be provided on either a periodic or continuous basis. Preferably, the process involves relatively infrequent, such as once or twice a week, addition of algacidal composition. Alternatively, if necessary or desirable, continuous addition of the algacidal composition may be utilized.

The term "effective algacidal amount" is defined as that amount of active ingredients, i.e., glutaraldehyde and quaternary ammonium compound combinations, which are sufficient to provide the improved properties of this invention. The precise concentration of algacide provided in the aqueous system is not narrowly critical. Sufficient algacidal composition is added providing an effective amount during use, typically from about 10 to about 200, preferably from about 20 to about 100, and most preferably from about 20 to about 30 weight parts per million of active ingredients per aqueous solution being treated.

The process of this invention concerns the treatment of aqueous systems subjected to algae. In general, the algae which may be treated by the process of this invention includes such common algae as: _Anabaena_ , _Chlorella_, _Euglena_, _Oscillatoria_, _Spirogyra_, _Ulothrix_, _Volvox_, and the like.

The process of this invention may be useful in a wide variety of aqueous systems which, usually through at least partial exposure to the environment including direct or indirect sunlight, are subject to algae contamination and fouling. Any aqueous system containing algae for which treatment is desired may be treated. Such systems include, for example, water or aqueous systems used in cooling towers, swimming pools, air conditioning systems, marine ballast tanks, storage separator systems, exterior water containing vessels or piping, fountains, ponds or other natural or artificial bodies of water, pipelines, industrial air washers, or any body of water conductive to the growth of algae. The

process of this invention is particularly applicable to aqueous systems which recirculate or otherwise generate turbulent flow conditions in the aqueous system, such as cooling towers, swimming pools or the like.

In a typical embodiment, an effective algacidal amount of the algacidal composition is added to an aqueous system to be treated at a point of uniform mixing, such as at the sump of a recirculating cooling tower or air washer, or at a point immediately upstream of a recirculating pump. Once the algacidal composition has been homogeneously dispersed in the system, in generally less than two hours, other typical adjuvants may be provided following standard procedures.

The process of this invention provides a combination of advantages not heretofore achieved or suggested in the prior art. In particular, the process of this invention provides environmentally acceptable, synergistically enhanced efficacy in controlling algae growth generally beyond that achieved by equal concentrations of existing algacidal compositions. Algacidal activity is provided by the process of this invention using total actives concentrations generally significantly less than total actives concentrations required by each actives component individually. In addition, the process of this invention provides actives concentration during use with low foaming, low odor, low corrosivity, utility over a relatively wide pH range, good compatibility with other adjuvants during use, as well as reduced environmental hazard during and after use. Such improved properties enable the use of lower total concentrations of active ingredients and, consequently, reduced costs in controlling algae growth.

The following examples are provided as illustrative of various embodiments of this invention and are not intended to limit the scope thereof.

EXAMPLES

In these examples, unless otherwise indicated, an algacidal composition as used in this invention was prepared by mixing 9 weight parts of 50 weight percent glutaraldehyde with 1 weight part 80 weight percent of a mixture of alkyl($C_{14}$-50%, $C_{12}$-40% and $C_{16}$-10%) dimethyl benzyl ammonium chlorides (hereinafter referred to as ADBAC), distributed under the tradename BARQUAT MB-80 by Lonza, Inc., to produce an algacidal composition containing a minimum concentration of 42.5 weight percent glutaraldehyde and a minimum concentration of about 7.5 weight percent quaternary ammonium compound, having a corresponding weight ratio of glutaraldehyde to quaternary ammonium compound of approximately 5.67:1.

Examples 1-5 and Controls A-I: Experimental

In these experiments, the efficacy of various algacidal compositions was evaluated in the following manner. Algae, specifically <u>Chlorella vulgaris</u>, was grown in a Bristol's growth medium at 20°C for seven days. The indicated concentrations of designated algacidal compositions were then added. After 5 hours of contact time, a 1 ml aliquot of each test flask was used to inoculate a fresh 50 ml of Bristol's growth media. After seven days at 20°C the absorbance of the growth medium in each flask was read using a Klett-Summerson filter photometer. Each sample was tested in duplicate to provide an average value of absorbance. A lower Klett number indicates that more algae were killed, demonstrating increased efficacy of the test sample.

In Examples 1-3 an algacidal composition of this invention containing 5.67:1 weight mixture of glutaraldehyde/ADBAC, prepared as described previously, was evaluated at the designated use concentrations for algacidal activity. For comparison, Control Example A was conducted free of any algacide, and Control Example B the designated concentration of glutaraldehyde alone was added. The results are set forth in Table I.

**TABLE I**

**Examples 1-3 versus Controls A and B**

| Example | Algacide | Use Concentration (ppm) | Klett # |
|---|---|---|---|
| A | None | 0 | 138 |
| 1 | Glut./ADBAC | 25 | 25 |
| 2 | Glut./ADBAC | 50 | 7 |
| 3 | Glut./ADBAC | 100 | 1 |
| B | Glutaraldehyde | 50 | 32 |

The results demonstrate that the use of the glutaraldehyde and quaternary ammonium compound combinations of this invention provide superior algacidal activity, even at equal or lower use concentrations than for glutaraldehyde alone.

In Example 4 and Control Examples C-E, algacidal compositions were tested and compared as described previously. In Example 4 the previously described algacidal composition containing glutaraldehyde and quaternary ammonium compound in combination was evaluated. For comparison, Control Example C was conducted free of algacide and Control Examples D and E were conducted using the designated concentrations of quaternary ammonium compound alone and glutaraldehyde alone, respectively. The results are set forth in Table II.

**TABLE II**

| Example | Algacide | Use Concentration (ppm) | Klett # |
|---|---|---|---|
| C | None | 0 | 138 |
| 4 | Glut./ADBAC | 25 | 41 |
| D | ADBAC | 4 | 104 |
| E | Glutaraldehyde | 21 | 81 |

The results demonstrate that the combination of glutaraldehyde and quaternary ammonium compound of this invention exhibits a synergistically enhanced algacidal activity when compared with the corresponding concentrations of the individual components as used in the combination.

In Example 5 and Control Example F-I, algacidal compositions were prepared and tested as in the previous Examples at the designated concentrations set forth in Table III.

**TABLE III**

| Example | Algacide | Use Concentration (ppm) | Klett # |
|---|---|---|---|
| F | None | 0 | 157 |
| 5 | Glut./ADBAC | 25 | 23 |
| G | Glutaraldehyde | 25 | 46 |
| H | ADBAC | 25 | 16 |
| I | ADBAC | 10 | 79 |

The results demonstrate that mixtures of glutaraldehyde and quaternary ammonium compound of this invention provide increased algacidal activity even when compared with algacidal compositions having quaternary ammonium compound at significantly increased concentrations, as in Control Example I of 10 ppm ADBAC as compared to the 3.75 ppm ADBAC in Example 5. At equal concentrations of total glutaraldehyde/quaternary ammonium compound combinations and quaternary ammonium compound alone, as in the Control Example H, improved algacidal activity is achieved at the expense of excessive foaming and incompatibility with corrosion inhibitors present during treatment of typical aqueous systems. Equal total concentrations of active ingredients, i.e., the glutaraldehyde and quaternary ammonium compound combinations, of this invention, as in Example 5, do not exhibit such disadvantages.

Example 6: Field Tests

Two open, recirculating cooling water systems were treated with the glutaraldehyde and quaternary ammonium compound combination of the invention described previously for a period in excess of six months. Prior to such treatment, the cooling water systems had been treated with weekly doses to maintain a concentration of 50-75 ppm glutaraldehyde. Using the glutaraldehyde/quaternary ammonium compound mixture of this invention, the weekly treatment levels were reduced to 30-40 ppm of total active ingredients while providing improved algacidal performance. Internal areas of the cooling tower, evaluated during shut-down for routine maintenance, were noticeably cleaner than the previous period when glutaraldehyde alone was used. In addition, immediately following application of the glutaraldehyde/ quaternary ammonium compound combination, enhanced algae removal was apparent upon inspection. Such removal was much less pronounced when using only glutaraldehyde.

## Claims

1. A process for controlling algae growth in an aqueous system which comprises adding an effective algacidal amount of an algacidal composition to said aqueous system, wherein said algacidal composition contains glutaraldehyde and quaternary ammonium compound as active components.

2. The process of claim 1 wherein said quaternary ammonium compound is represented by the structural formula:

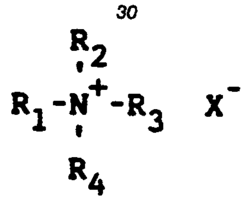

wherein:

$R_1$ and $R_2$ are each individually hydrogen, or $C_{1-4}$ alkyl, or taken together form a cycloalkyl or aromatic ring;

$R_3$ is alkyl, aryl, alkylaryl, aralkyl, cycloalkyl, or together with $R_1$ $R_2$ forms a heterocyclic aromatic ring;

$R_4$ is long chain alkyl having at least 10 carbon atoms, and

X is an anion.

3. The process of claim 2 wherein $R_1$ and $R_2$ are methyl, $R_3$ is methyl, benzyl or ethylbenzyl, $R_4$ is $C_{10-18}$ alkyl and X is a halide.

4. The process of claim 3 wherein said quaternary ammonium compound is a mixture of $C_{12-16}$ alkyl dimethyl benzyl ammonium chlorides.

5. The process of one or more of the claims 1-4 wherein said algacidal composition provides an amount of between about 10 to about 200 parts per million of said active components in said aqueous system.

6. The process of claim 5 wherein said algacidal composition provides an amount of between about 20 to about 50 parts per million of said active components in said aqueous system.

7. The process of one or more of the claims 1-6 wherein the weight ratio of glutaraldehyde to quaternary ammonium compound is between about 0.5:1 to about 15:1.

8. The process of claim 7 wherein said ratio is from about 5:1 to about 6:1.

9. The process of one or more of the claims 1-8 wherein said algacidal composition contains water and between about 10 to about 50 weight percent glutaraldehyde and between about 1 to about 40 weight percent quaternary ammonium compound.

10. A process for controlling algae growth in an aqueous system which comprises providing said aqueous system with from about 20 to about 50 weight parts per million of active components in an algacidal composition containing glutaraldehyde and a mixture of $C_{12-16}$ alkyl dimethyl benzyl ammonium chlorides as active components in a weight ratio of glutaraldehyde to said mixture of between about 5:1 to about 6:1.